# EUROPEAN PATENT SPECIFICATION

(11) **EP 4 208 643 B1**
(45) Date of publication and mention of the grant of the patent: **22.05.2024**
(21) Application number: 21701041.2
(22) Date of filing: 19.01.2021
(51) Int. Cl.: F03D 80/50, B21B 28/00

(54) **METHOD OF REPAIRING A WIND TURBINE**
VERFAHREN ZUR REPARATUR EINER WINDTURBINE
PROCÉDÉ PERMETTANT DE RÉPARER UNE ÉOLIENNE

(30) Priority: 01.09.2020 DK PA202070566
(43) Date of publication of application: 12.07.2023
(73) Proprietor: VESTAS WIND SYSTEMS A/S, 8200 Aarhus N (DK)
(72) Inventor: CLAGES, Henning, 23568 Lübeck (DE)
(74) Representative: Vestas Patents Department
(86) International application number: PCT/DK2021/050016
(87) International publication number: WO 2022/048718

(56) References cited:
- DE-B3-102005 048 781
- US-A1- 2011 209 347

## Description

### TECHNICAL FIELD

The invention relates to a method of repairing a wind turbine and, in particular, to repairing a housing component of a gear assembly of the wind turbine. Aspects of the invention relate to a repair method, to a repaired gear assembly, and to a repaired wind turbine.

### BACKGROUND

Wind turbines for power generation are well known in the art. The size and scale of wind turbines is becoming ever larger to increase their power generating capacity. A typical wind turbine has a tower supporting a nacelle, a rotor hub and a plurality of rotor blades connected to the rotor hub.

The nacelle of a wind turbine houses a number of bearings for supporting, and facilitating rotation of, a number of different components, e.g. shafts or gear components. For instance, a main shaft of the wind turbine extends between the rotor and a gearbox assembly of the wind turbine, and will typically be supported by a main bearing at the rotor side and another bearing at the gearbox side. A generator shaft of the wind turbine extends between the gearbox assembly and a generator of the wind turbine, and can also be supported by one or more bearings. In the gearbox assembly, bearings are used to support rotating gear components, e.g. a planetary gear outer ring. Other bearings in a wind turbine may include, for example, a yaw control mechanism bearing or a blade pitch control mechanism bearing.

In certain scenarios, the outer ring can rotate. The friction resulting from such relative movement causes wear to the housing. In particular, this can cause a reduction in housing thickness or increase in the radius of the bearing bore. This is undesirable because it leads to an increased likelihood of the bearing outer ring rotating during normal operation of the wind turbine such that the bearing does not perform its function properly. The wear to the housing is also undesirable because it can lead to misalignment of the rotating components that the bearing supports. For instance, in the case of a bearing for a planetary gear outer ring, the gears and pinion of the gear assembly may become misaligned and cause damage to, or even failure of, the gear components, e.g. broken gear teeth, component fracture, etc., necessitating replacement of the entire gearbox, which is a particularly expensive component. Misalignment of the rotating components can also be caused by manufacturing problems or fretting corrosion.

One idea for addressing this problem is to form a metal plate and attach it to either the outer surface of the bearing outer ring, or to the inner surface of the bearing housing defining the bore, in order to fill in the gap created by the wear. However, this approach is disadvantageous in that it is expensive and laborious to form a metal plate of the correct dimensions. This approach is also not suitable in situations where access to the gap is restricted, for instance where the bore is defined by a single piece such that the bore cannot be 'opened' in order to gain access to it. This is in contrast to a split-line housing (or simply, 'split housing'), for instance, where the housing may be formed of separate upper and lower (half) portions each defining part of the bore, and the upper (half) portion can be removed from the lower (half) portion to perform repair.

A general method for repairing wind turbines is known from US2011209347A1.

It is against this background to which the present invention is set.

### SUMMARY OF THE INVENTION

According to an aspect of the present invention there is provided a method of repairing a wind turbine. A gear assembly (gearbox assembly, or gearbox) of the wind turbine comprises a housing component having an inner surface defining a bore and a bearing housed in the bore. The method comprises drilling a hole from an outer surface of the housing component to the inner surface. The hole is formed or drilled to communicate with a gap created by wear between the housing component and the bearing. The gap is defined between the inner surface of the housing component and an outer surface of the bearing. The method comprises injecting a liquid resin through the hole to fill the gap, and allowing the liquid resin to solidify in the gap prior to resuming operation of the wind turbine. The method may comprise drilling the hole in a radial direction relative to the bore.

In some examples, wear between the housing component and the bearing causes the gap to be created substantially centrally at an upper side of the bore. In such cases, the method may comprise drilling the hole through an upper part of the housing component.

The method may comprise drilling the hole in a substantially vertical direction through the housing component.

The method may comprise closing the hole after the liquid resin has been injected.

The method may comprise drilling the hole as a threaded hole. The method may comprise closing the hole using a removable threaded cap having a thread size corresponding to that of the threaded hole.

The method may comprise marking a rotational position of the outer surface of the bearing relative to the hole prior to closing the hole.

The method may comprise injecting a cleaning liquid through the hole to clean the gap prior to injecting the liquid resin.

In some examples, the bore in which the wear occurs is an intermediate shaft bore in which an intermediate speed shaft of the gear assembly is received therethrough, the intermediate speed shaft being coupled between a high-speed shaft coupled or connected to a generator of the wind turbine and a low-speed shaft coupled to a rotor of the wind turbine.

In some examples, the bearing, in the intermediate shaft bore, at which the wear occurs is a rotor-end bearing located at or towards an end of the intermediate shaft bore proximal to the rotor of the wind turbine.

The method may comprise, prior to allowing the liquid resin to solidify in the gap, checking whether realignment of the bearing within the bore is needed.

In some examples, if realignment is needed, the method may comprise performing realignment of the bearing within the bore, optionally using a sling device.

According to another aspect of the present invention there is provided a wind turbine gearbox, repaired according to the method described above.

According to another aspect of the present invention there is provided a wind turbine, repaired according to the method described above.

### BRIEF DESCRIPTION OF THE DRAWINGS

One or more examples of the invention will now be described, by way of example only, with reference to the accompanying drawings, in which:
Figure 1 illustrates a wind turbine according to an aspect of the present invention;
Figure 2 shows a sectional rear view of a housing component of a gear assembly of the wind turbine of Figure 1; and,
Figure 3 shows the steps of a method for repairing the housing component of Figure 2.

### DETAILED DESCRIPTION

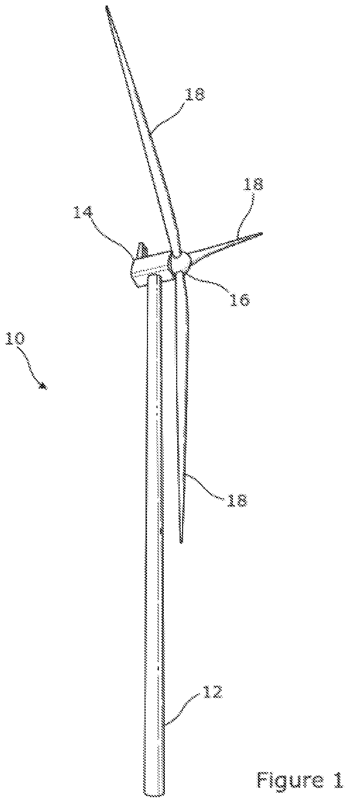

Figure 1 shows a wind turbine 10 including a tower 12, a nacelle 14 rotatably coupled to the top of the tower 12, a rotor including a rotor hub 16 mounted to the nacelle 14, and a plurality of wind turbine rotor blades 18 - in the described example, three rotor blades - which are coupled to the rotor hub 16. The nacelle 14 and rotor blades 18 are turned and directed into the wind direction by a yaw system. The nacelle 14 houses generating components (not shown) of the wind turbine 10, including a generator, gearbox assembly (gear assembly or, simply, gearbox), drivetrain and brake assembly, as well as convertor equipment for converting the kinetic energy of the wind into electrical energy for provision to the grid. The wind turbine 10 is shown in its fully-installed form suitable for operation; in particular, the rotor hub 16 is mounted on the nacelle 14 and each of the blades 18 are mounted on the rotor hub 16.

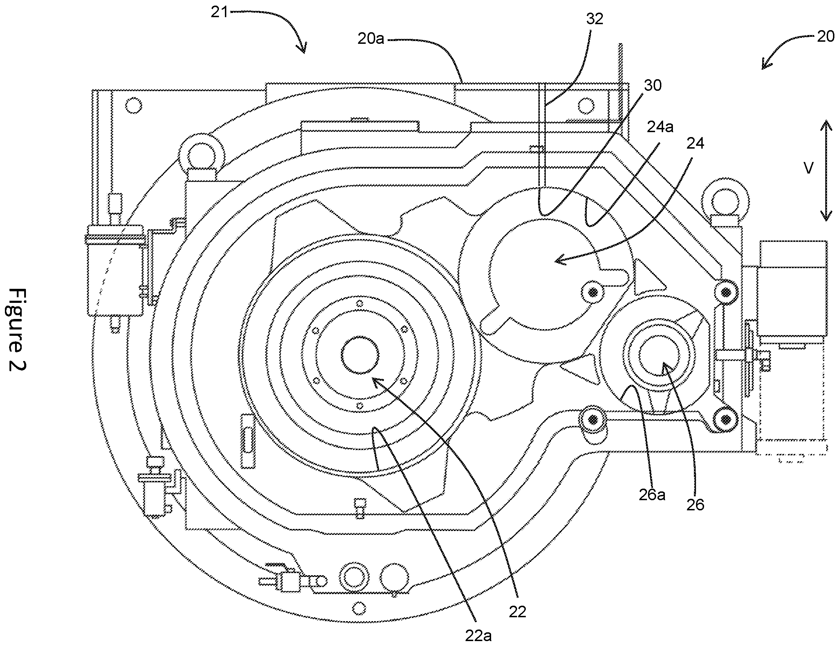

Figure 2 illustrates a sectional rear view of a bearing housing 20 - or gearbox housing - of the gearbox assembly housed in the nacelle 14 of the wind turbine 10. The housing 20 supports or houses a number of components of the gearbox assembly. The gearbox is used to increase the rotational speed of the main shaft driven by the rotation of the rotor hub 16 and rotor blades 18 to the rotational speed of the generator shaft that drives the wind turbine generator.

The housing 20 defines a number of bearing bores. In the described example, a low-speed shaft bore 22, an intermediate shaft bore 24 and a high-speed shaft bore 26 are formed by the housing 20. That is, the housing 20 has respective inner surfaces 22a, 24a, 26a defining the respective low-speed, intermediate and high-speed shaft bores 22, 24, 26. By 'inner surface' is meant the circumferential inner surface defining the bores. The low-speed shaft bore 22 is for receiving a low-speed shaft of the wind turbine 10 that is coupled to a main shaft of the wind turbine 10. The intermediate shaft bore 24 is for receiving an intermediate speed shaft of the wind turbine 10. The high-speed shaft bore 26 is for receiving a high-speed shaft of the wind turbine 10 that couples the gearbox to the generator. The intermediate speed shaft is located between, and couples together, the low- and high-speed shafts. In particular, the gearbox of the described example is a multi-stage gearbox and the intermediate speed shaft connects a low-speed gear stage and a high-speed gear stage.

The bores 22, 24, 26 are arranged to receive or house bearings for facilitating rotation of the rotating low-speed, intermediate and high-speed shafts. In particular, the intermediate shaft bore 24 may include a bearing at each of a rotor end/side and a generator end/side of the bore 24. Each bearing includes an outer ring and an inner ring rotatable relative to the outer ring with suitable means for allowing this relative rotation dependent on which type of bearing is used. Some examples of bearings well-known to the skilled person are ball bearings, roller bearings, and plain bearings. The outer ring is fixed to the respective inner surface 22a, 24a, 26a of the housing 20, and the inner ring is fixed to the rotatable component/shaft within the bore 22, 24, 26.

In the described example, the gearbox assembly is a three-stage gearbox assembly comprising three consecutive stages. At an input to the gearbox, a low-speed stage including the low-speed shaft is provided where, in the described example, the low-speed stage is a planetary stage (having a planetary gear arrangement), which is particularly suitable for handling high torques from the rotor 16. This planetary stage is then followed by two consecutive parallel stages having sets of (spur) gears that further speed up the rotation. In particular, a first one of the parallel stages (after the low-speed stage) is an intermediate stage, including the intermediate-speed shaft, and a second one of the parallel stages is a high-speed stage, including the high-speed shaft. In an alternative example, the second stage may use a planetary gear set with only the third stage being a parallel stage. The ratio of the gearbox may be in line with common gearbox ratios, such as about 90:1, but it will be understood that any suitable ratio may be used.

During operation of the wind turbine 10, a bearing outer ring may in certain undesirable scenarios rotate or otherwise move relative to the inner surface 22a, 24a, 26a of the bores 22, 24, 26. This may cause wear of the bore inner surfaces 22a, 24a, 26a such that the shape of the bores 22, 24, 26 may change. In particular, the radius of the bores 22, 24, 26 may change such that the respective bearings are no longer positioned correctly in the bores 22, 24, 26, which can cause damage or even failure of the gearbox components. Specifically, a gap may form between the outer bearing ring and the inner surface 22a, 24a, 26a of the bearing bores 22, 24, 26, which may increase the likelihood of further relative movement between the bearing outer ring and the bore 22, 24, 26.

A particular form of wear that may occur in a gearbox as in the described example is to the intermediate shaft bore 24. As seen in Figure 2, the intermediate shaft bore 24 is located between the low-speed and high-speed shaft bores 22, 26, the intermediate shaft bore 24 being positioned slightly higher than the low- and high-speed shaft bores 22, 26. The intermediate shaft bore 24 may in particular house a bearing at a rotor side/end of the gearbox.

In such a gearbox, operation of the wind turbine 10 - i.e. when the shafts are rotating - can result in rotation of an outer ring of this rotor-end bearing in the intermediate shaft bore 24 relative to the bore surface 24a. This causes friction between the bearing and the bore inner surface 24a as the bearing outer ring rubs and moves against the inner surface 24a.

The geometry of the described gearbox is such that rotation of the rotor-end bearing in the intermediate shaft may cause wear at a particular location within the bore 24. In particular, the wear may be most severe at, or be limited to, an upper part of the intermediate shaft bore 24. Specifically, it has been observed that wear is caused at the top of the intermediate shaft bore 24, that is, centrally at the upper part of the bore 24, i.e. a '12 o'clock' position or 'middle' position of the inner surface 24a as viewed in Figure 2.

The wear at the top part of the intermediate shaft bore 24 results in a gap being created or formed between the bore inner surface 24a and the rotor-end bearing outer ring centrally at the upper side of the bore 24. The location of the wear/gap is indicated generally by reference numeral 30 in Figure 2.

Such wear can cause misalignment of the bearing and the shaft within the bore 24, which in turn can cause damage to components of the gearbox, e.g. broken gear teeth on the intermediate speed shaft. It is not a feasible option to change the intermediate speed shaft when such damage occurs as an external crane would be needed to remove part of the gearbox, and it normally would not be of economic value to commit to the costs involved with this for a potentially relatively old gearbox.

A different, economically viable solution is therefore needed when gearbox wear of the type outlined above is suffered in order to allow continued operation of the gearbox without further damage. In the described example, the particular location of the wear suffered in the gearbox in relation to the layout of the gearbox is exploited to repair the wind turbine 10. That is, the location of the wear at the top of the intermediate shaft bore 24 means that the wear is adjacent to an upper side 21 of the gearbox housing 20, and an engineer may be able to access this upper side 21 more readily than other parts of the gearbox.

It is known that application of a metal glue, resin or adhesive to a location of wear of a bearing bore can be used to repair the bore. However, gaining access to the location of the wear (internal to the gearbox) to apply such adhesive can be problematic. In the described example, therefore, the fact that the wear is located adjacent to the upper side 21 of the housing 20 is exploited in order to apply glue to the appropriate area of the bearing bore. Specifically, a hole is drilled in the gearbox housing 20 from the outer surface 20a to the location of the wear/gap at the inner surface 24a of the intermediate shaft bore 24 so that adhesive may be supplied to the location of the wear, as is described in greater detail below.

Prior to commencing repair of the gearbox, one or more gearbox components may be inspected visually for damage to determine whether repair of the wind turbine 10 is needed. For instance, this can involve inspecting the gear teeth of the gear assembly for wear or damage; in particular, wear of the bearing as described above can cause micropitting of the gear teeth - i.e. micro-scale pits on the surface of a gear tooth flank, e.g. at the teeth corners, caused by excessive stress. The location of such damage in the present case may be at an intermediate speed gear wheel and/or an intermediate speed pinion.

When it has been determined that repair of the wind turbine 10 is needed (i.e. there is wear present at the top side of the bearing bore 24 such that the bore 24 needs to be repaired), operation of the wind turbine 10 is stopped or paused. This means that the shafts received in each of the bores 22, 24, 26 of the housing component 20 cease to rotate. The wear that has been suffered by the gearbox may mean that a gap has been created between the bore inner surface 24a and the outer ring of the bearing housed therein. When the shafts, including the intermediate speed shaft received in the intermediate shaft bore 24, stop rotating gravity may cause the intermediate shaft to move or slip downwards in the bore 24, i.e. towards a `6 o'clock' position. This causes the gap between the bore inner surface 24a and the bearing outer ring at the top side 30 of the bore 24 (at the 12 o'clock position) - i.e. opposite the direction of slip of the intermediate speed shaft - to be created, or to increase in size.

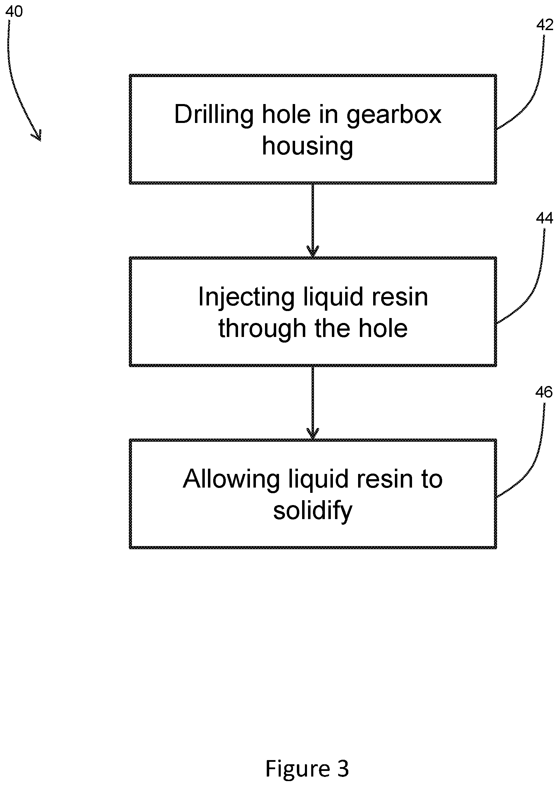

A method 40 of repairing the wind turbine 10 in the present example is now described with reference to Figure 3. At step 42, a hole 32 (as indicated in Figure 2) is drilled from the outer surface 20a of the housing component 20 to the inner surface 24a of the bore 24. The hole 32 is drilled or formed to communicate with the gap created by wear between the housing component 20 and the bearing. As mentioned, the gap is defined between the inner surface 24a of the housing component 20 and an outer surface (of an outer ring) of the bearing. For instance, the hole 32 may be drilled until the bearing outer ring is reached.

As indicated in Figure 2, in the described example the hole 32 is drilled in a radial direction relative to the bore 24. In particular, in the described example the hole 32 is drilled in a substantially vertical direction V through the housing component 20. One or both of these features can make it easier to drill through the housing component 20.

In the described example, a portable magnetic drilling machine is used to form the hole 32. In particular, the drill has a thread so that the hole 32 is in the form of a threaded hole or bore. A threaded bit having a suitable thread designation is used, for instance G1.25 or G1.5; however, other designations are possible.

Prior to treating the bore surface wear with resin, the surfaces defining the gap, i.e. the bore inner surface 24a and the bearing outer surface, may be cleaned so that oil on the surfaces is removed or washed out. Such a step may improve the effectiveness of the resin when it is then supplied into the gap. In particular, a cleaning liquid may be injected through the hole 32 from the outer surface 20a of the housing 20 to clean the gap (of oil) prior to the resin treatment. Specifically, a cleaning liquid that evaporates relatively quickly and leaves the surfaces dry and clean may be preferred so that the gap is suitably prepared for the resin treatment. The amount of cleaning liquid that is used may depend on the size of the gap that has been created, but any suitable amount of liquid may be used to clean the gap, for instance about one litre of liquid (as a non-limiting example).

At step 44, a liquid resin is injected or supplied through the hole 32 from the outer surface 20a of the housing 20 to fill the gap defined between the bore inner surface 24a and the bearing outer ring surface. The liquid resin is in particular an epoxy glue or metal glue so that it will stick to the housing inner surface 24a and/or the bearing outer ring surface. The amount of glue that is applied is sufficient to fill the gap when the gearbox is in its assembled state and will therefore be dependent on the size of the gap.

The size of the gap can vary depending on the level of wear that has been suffered. For instance, a height of the gap - i.e. a vertical distance between the bore surface 24a and the bearing outer surface at the top of the bore 24 - may be in the order of tenths of millimetres. A suitable liquid resin capable of bridging the height of the gap is therefore chosen. A gap having a height above a certain value may generally correspond to a point at which one or more of the gear teeth may break.

It can be more difficult to accurately determine the extent of the gap in a circumferential direction of the bore 24; however, the liquid resin can be injected through the hole 32 until the glue fills the gap.

At step 46, the liquid resin is allowed to solidify in the gap prior to resuming operation of the wind turbine 10, i.e. prior to the shafts resuming rotation in the bores 22, 24, 26. The amount of time that the resin is left to dry may depend on the amount of resin that is supplied to the gap. As a non-limiting example, the glue may be left to dry for several hours, e.g. about 24 hours, before the wind turbine 10 resumes operation.

After the liquid resin has been injected into the gap but prior to the wind turbine 10 resuming operation, the hole 32 may be closed. In particular, a plug or cap having the same thread size as that used to drill the hole is used to close the hole 32. The plug preferably has a thread seal to guard against leakage into or out of the bore 24 from or to the outer part of the housing 20. The hole 32 may be closed with the plug before or after the resin has been allowed to dry. The plug may be removably threaded into the hole 32 so that the hole 32 can be opened again in future to, for instance, check whether further rotation of the bearing outer ring has occurred and/or to further treat the worn bore with liquid resin.

Prior to closing the hole 32, the location of the hole opening at the bore side relative to the rotational position of the bearing outer ring may be marked or otherwise recorded or noted. In this way, the bore 24 can be re-accessed from the outer surface 20a of the housing 20 to check whether further rotation of the bearing outer ring has taken place.

In the repaired wind turbine 10 the solidified resin restores a nominal or required radius of the bore 24 and/or the bearing outer ring. In this way, the glue replaces those parts of the housing inner surface 24 (and/or bearing outer ring) that have worn away, and therefore acts to prevent rotation of the bearing outer ring in the bore 24 upon resumption of operation of the wind turbine 10.

When the bore surface becomes worn in the manner described above this can cause misalignment of the intermediate speed shaft relative to the bearing and/or the bore 24. In particular, the wear is at the top of the bore meaning that the diameter of the bore between its top and bottom (through the centre) becomes larger than it should be, and is larger than the diameter of the outer ring of the bearing that it houses. In turn, this means that during operation of the wind turbine when the intermediate speed shaft is rotating, the intermediate speed shaft can become misaligned, and possibly oscillate, in a vertical (up and down) direction V between the top and bottom of the bore. However, when wind turbine operation is stopped for the repair to take place the shaft stops rotating and will move downwards under gravity towards the bottom of the bore. As the wear is not at the bottom of the bore the position that the intermediate speed shaft slips to under gravity is in fact a correct or aligned position. A key effect of performing the described repair method is therefore that it automatically maintains a correct alignment of the intermediate speed shaft upon operation of the wind turbine restarting, without the need for performing active alignment, as the injected glue will act to prevent up-and-down oscillation of the intermediate speed shaft as it rotates.

Many modifications may be made to the examples described herein without departing from the scope of the appended claims.

In the above described example, the wear suffered by the gearbox housing is at a top side/part of the bore surface ('12 o'clock' position). In different examples, however, wear may occur at any circumferential position of the housing inner surface defining the bore. The described repair method may also be used for wear at different circumferential positions. The side or part of the gearbox housing from which the hole is drilled to allow insertion of the glue may be chosen in dependence on the location of the wear, e.g. from a part that can be accessed easily to drill the hole while minimising the amount of the housing that needs to be drilled through (i.e. minimising the length of the hole).

In the above-described example, the wear suffered by the gearbox housing is in a bore that houses an intermediate speed shaft of the gearbox and, in particular, between an outer ring of a rotor-side bearing supporting the intermediate speed shaft and the housing inner surface. In different examples, the wear may be at/adjacent to a different bearing in the intermediate speed bore. For instance, this bore may house two bearings that support the intermediate speed shaft, e.g. one at either end of the shaft. Instead of, or in addition to, wear being suffered at the rotor-side bearing as in the described example, wear may be suffered at a generator-side bearing in the intermediate speed bore, and so the described repair method may additionally or alternatively be performed at this location.

In further different examples, the wear may be in a bore that houses a shaft other than the intermediate shaft, for instance a bore that houses the high-speed shaft or the low-speed shaft of the wind turbine. The described repair method may be used in to repair those different bores and bearings in a corresponding manner to the described example where access to the wear may be achieved by drilling through a housing component. Indeed, although the described example is for a three-stage gearbox having a low-speed shaft, a high-speed shaft and a single intermediate speed shaft, in different examples the described repair method could be applied to one or more bore of a gearbox having just a low-speed shaft and a high-speed shaft (with no intermediate speed shaft) or a gearbox having multiple intermediate speed shafts. In general, examples of the invention may include a multi-stage gearbox having at least one planetary stage and at least one parallel (spur gear) stage.

In the above-described example, the location of the wear in the bore means that automatic realignment, or maintenance of alignment, of the intermediate speed shaft is achieved when the described method is carried out. However, in different examples - for instance, examples in which wear occurs at a different circumferential location of the bore - active realignment of the shaft in the bearing or bore may need to be performed prior to injection of the liquid resin. Active realignment means that the shaft needs to be actively repositioned in the bore rather than realignment occurring automatically as occurs in the case of wear located as in the above-described examples. Active realignment may be performed in any suitable way. For instance, a sling device may be wrapped around the shaft at a suitable orientation and a force may be applied to the shaft via the sling to change the alignment of the shaft in the bore. The sling may be attached to a device or machine that can move the sling to apply the required force in the required direction to the shaft. Once the shaft has been suitably realigned this will create a gap at the location of the wear that accurately reflects a space that needs to be filled with liquid resin to maintain proper shaft alignment for when operation of the wind turbine resumes.

Examples and embodiments of the invention are advantageous in that they provide a relatively simple method for repairing a gearbox bearing bore, in a wind turbine, that has suffered wear. In particular, examples of the invention are advantageous in that disassembly or replacement of the gearbox is avoided. This can provide significant cost savings as the gearbox is a particularly expensive part of a wind turbine, and disassembly of a component of such scale is time consuming, logistically challenging and often not possible or feasible. The gearboxes of many wind turbines are so-called 'split housing' gearboxes in which the housing includes a lower (half) portion and an upper (half) portion that is removable from the lower portion. The bearing bores in such a split housing may be defined by both the upper and lower housing portions such that removal of the upper portion allows access to the inner surfaces of the upper and lower parts of the bores. Prior known methods require removal of the upper housing portion to access the bores in this manner in order to perform a repair method on the bore. The present invention does not require such time consuming and expensive access in the case of a split housing, and provides a solution that can be applied equally to gearboxes not having a split housing - such as the one in the above-described example - unlike some prior known methods.

Examples and embodiments of the invention are advantageous in that they utilise the fact that, in certain types/configurations of wind turbine gearbox, wear typically occurs in predictable locations. The present repair method is devised based on knowledge of the locations of likely wear, and exploits the fact that such locations are adjacent to an outer part of the gearbox housing. In particular, the present repair method utilises this particular geometry to determine that access to a worn part of a bearing may be readily accessed in an inexpensive manner by drilling through the gearbox housing in a way that minimises the amount of drilling needed so as not to compromise the gearbox structure.

Examples and embodiments of the invention are advantageous in that they provide automatic realignment of a shaft in a bearing bore. Typically, a shaft can become misaligned in a bearing bore when the bore becomes worn as relative radial movement (oscillations) of the shaft in the bore becomes possible when the shaft rotates during wind turbine operation. The inventors have realised that for a particular gearbox geometry/arrangement - such as in the above-described example - a typical location of wear in a bearing bore means that the provision of a liquid adhesive (epoxy glue) to repair the bore when the shaft is in-situ results in automatic realignment of the shaft in the bearing bore so that oscillations during wind turbine operation are prevented, ultimately reducing the risk of damage to components of the gearbox, e.g. gear teeth.

## Claims

1. A method (40) of repairing a wind turbine (10), a gear assembly of the wind turbine (10) comprising a housing component (20) having an inner surface (22a, 24a, 26a) defining a bore (22, 24, 26) and a bearing housed in the bore (22, 24, 26), the method (40) being **characterised by**:
drilling (42) a hole (32) from an outer surface (20a) of the housing component (20) to the inner surface (22a, 24a, 26a), the hole (32) being formed to communicate with a gap created by wear between the housing component (20) and the bearing, the gap being defined between the inner surface (22a, 24a, 26a) of the housing component (20) and an outer surface of the bearing; and,
injecting (44) a liquid resin through the hole (32) to fill the gap, and allowing (46) the liquid resin to solidify in the gap prior to resuming operation of the wind turbine (10).

2. A method (40) according to Claim 1, comprising drilling the hole in a radial direction relative to the bore (22, 24, 26).

3. A method (40) according to Claim 1 or Claim 2, wherein wear between the housing component (20) and the bearing causes the gap to be created substantially centrally at an upper side (30) of the bore (22, 24, 26), and wherein the method (40) comprises drilling the hole (32) from an upper side (21) of the housing component (20).

4. A method (40) according to Claim 3, comprising drilling the hole (32) in a substantially vertical direction (V) through the housing component (20).

5. A method (40) according to any previous claim, comprising closing the hole (32) after the liquid resin has been injected.

6. A method (40) according to Claim 5, comprising drilling the hole (32) as a threaded hole, and comprising closing the hole (32) using a removable threaded cap having a thread size corresponding to that of the threaded hole.

7. A method (40) according to Claim 5 or Claim 6, comprising marking a rotational position of the outer surface of the bearing relative to the hole (32) prior to closing the hole.

8. A method (40) according to any previous claim, comprising injecting a cleaning liquid through the hole (32) to clean the gap prior to injecting the liquid resin.

9. A method (40) according to any previous claim, wherein the bore (24) in which the wear occurs is an intermediate shaft bore (24) in which an intermediate speed shaft of the gear assembly is received therethrough, the intermediate speed shaft being coupled between a high-speed shaft coupled to a generator of the wind turbine (10) and a low-speed shaft coupled to a rotor (16) of the wind turbine (10).

10. A method (40) according to Claim 9, wherein the bearing, in the intermediate shaft bore (24), at which the wear occurs is a rotor-end bearing located at an end of the intermediate shaft bore (24) proximal to the rotor (16) of the wind turbine.

11. A method (40) according to any previous claim, comprising, prior to allowing the liquid resin to solidify in the gap, checking whether realignment of the bearing within the bore (22, 24, 26) is needed.

12. A method (40) according to Claim 11, wherein, if realignment is needed, actively realigning the bearing within the bore (22, 24, 26), optionally using a sling device.

13. A wind turbine gearbox, repaired according to the method (40) of any of Claims 1 to 12.

14. A wind turbine (10), repaired according to the method (40) of any of Claims 1 to 12.

## Patentansprüche

1. Verfahren (40) zum Reparieren einer Windkraftanlage (10), wobei eine Getriebeanordnung der Windkraftanlage (10) ein Gehäusebauteil (20) umfasst, das eine Innenfläche (22a, 24a, 26a) aufweist, die eine Bohrung (22, 24, 26) und ein in der Bohrung (22, 24, 26) untergebrachtes Lager definiert, wobei das Verfahren (40) **gekennzeichnet ist durch**:
Bohren (42) eines Lochs (32) von einer Außenfläche (20a) des Gehäusebauteils (20) zur Innenfläche (22a, 24a, 26a), wobei das Loch (32) zum Kommunizieren mit einem **durch** Abnutzung zwischen dem Gehäusebauteil (20) und dem Lager erzeugten Spalt gebildet wird, wobei der Spalt zwischen der Innenfläche (22a, 24a, 26a) des Gehäusebauteils (20) und einer Außenfläche des Lagers definiert ist; und
Einspritzen (44) eines flüssigen Harzes **durch** das Loch (32), um den Spalt zu füllen, und Ermöglichen (46), dass sich das flüssige Harz im Spalt vor einer Wiederaufnahme des Betriebs der Windkraftanlage (10) verfestigt.

2. Verfahren (40) nach Anspruch 1, umfassend Bohren des Lochs in einer radialen Richtung in Bezug auf die Bohrung (22, 24, 26).

3. Verfahren (40) nach Anspruch 1 oder Anspruch 2, wobei Abnutzung zwischen dem Gehäusebauteil (20) und dem Lager bewirkt, dass der Spalt im Wesentlichen zentral an einer oberen Seite (30) der Bohrung (22, 24, 26) erzeugt wird, und wobei das Verfahren (40) ein Bohren des Lochs (32) von einer oberen Seite (21) des Gehäusebauteils (20) umfasst.

4. Verfahren (40) nach Anspruch 3, umfassend Bohren des Lochs (32) in einer im Wesentlichen vertikalen Richtung (V) durch das Gehäusebauteil (20).

5. Verfahren (40) nach einem vorstehenden Anspruch, umfassend Verschließen des Lochs (32), nachdem das flüssige Harz eingespritzt wurde.

6. Verfahren (40) nach Anspruch 5, umfassend Bohren des Lochs (32) als Gewindeloch und umfassend Verschließen des Lochs (32) unter Verwendung eines abnehmbaren Gewindeaufsatzes, der eine Gewindegröße aufweist, die jener des Gewindelochs entspricht.

7. Verfahren (40) nach Anspruch 5 oder Anspruch 6, umfassend Kennzeichnen einer Drehposition der Außenfläche des Lagers in Bezug auf das Loch (32) vor einem Verschließen des Lochs.

8. Verfahren (40) nach einem vorstehenden Anspruch, umfassend Einspritzen einer Reinigungsflüssigkeit durch das Loch (32), um den Spalt vor einem Einspritzen des flüssigen Harzes zu reinigen.

9. Verfahren (40) nach einem vorstehenden Anspruch, wobei die Bohrung (24), an der Abnutzung auftritt, eine Zwischenwellenbohrung (24) ist, durch die eine Welle mittlerer Drehzahl der Getriebeanordnung aufgenommen wird, wobei die Welle mittlerer Drehzahl gekoppelt ist zwischen einer Welle hoher Drehzahl, die mit einem Generator der Windkraftanlage (10) gekoppelt ist, und einer Welle geringer Drehzahl, die mit einem Rotor (16) der Windkraftanlage (10) gekoppelt ist.

10. Verfahren (40) nach Anspruch 9, wobei das Lager, in der Zwischenwellenbohrung (24), an dem die Abnutzung auftritt, ein rotorseitiges Lager ist, das an einem Ende der Zwischenwellenbohrung (24) in der Nähe des Rotors (16) der Windkraftanlage gelegen ist.

11. Verfahren (40) nach einem vorstehenden Anspruch, umfassend, bevor ermöglicht wird, dass sich das flüssige Harz im Spalt verfestigt, Überprüfen, ob eine Neuausrichtung des Lagers innerhalb der Bohrung (22, 24, 26) erforderlich ist.

12. Verfahren (40) nach Anspruch 11, wobei, falls eine Neuausrichtung erforderlich ist, aktives Neuausrichten des Lagers innerhalb der Bohrung (22, 24, 26), wahlweise unter Verwendung einer Anschlagseilvorrichtung.

13. Windkraftanlagengetriebe, das nach dem Verfahren (40) nach einem der Ansprüche 1 bis 12 repariert wird.

14. Windkraftanlage (10), die nach dem Verfahren (40) nach einem der Ansprüche 1 bis 12 repariert wird.

## Revendications

1. Procédé (40) de réparation d'une éolienne (10), d'un ensemble engrenage de l'éolienne (10) comprenant un composant de boîtier (20) présentant une surface intérieure (22a, 24a, 26a) définissant un alésage (22, 24, 26) et un palier logé dans l'alésage (22, 24, 26), le procédé (40) étant **caractérisé par** :
le perçage (42) d'un trou (32) d'une surface extérieure (20a) du composant de boîtier (20) à la surface intérieure (22a, 24a, 26a), le trou (32) étant formé pour communiquer avec une fente créée par l'usure entre le composant de boîtier (20) et le palier, la fente étant définie entre la surface intérieure (22a, 24a, 26a) du composant de boîtier (20) et une surface extérieure du palier ; et
l'injection (44) d'une résine liquide à travers le trou (32) pour remplir la fente, et la permission (46) donnée à la résine liquide de se solidifier dans la fente avant de reprendre le fonctionnement de l'éolienne (10).

2. Procédé (40) selon la revendication 1, comprenant le perçage du trou dans une direction radiale par rapport à l'alésage (22, 24, 26).

3. Procédé (40) selon la revendication 1 ou la revendication 2, dans lequel l'usure entre le composant de boîtier (20) et le palier amène la fente à être créée sensiblement centralement au niveau d'un côté supérieur (30) de l'alésage (22, 24, 26), et dans lequel le procédé (40) comprend le perçage du trou (32) d'un côté supérieur (21) du composant de boîtier (20).

4. Procédé (40) selon la revendication 3, comprenant le perçage du trou (32) dans une direction sensiblement verticale (V) à travers le composant de boîtier (20).

5. Procédé (40) selon une quelconque revendication précédente, comprenant la fermeture du trou (32) après que la résine liquide a été injectée.

6. Procédé (40) selon la revendication 5, comprenant le perçage du trou (32) comme un trou fileté, et comprenant la fermeture du trou (32) en utilisant un capuchon fileté amovible présentant une taille de filet correspondant à celle du trou fileté.

7. Procédé (40) selon la revendication 5 ou la revendication 6, comprenant le marquage d'une position rotative de la surface extérieure du palier par rapport au trou (32) avant la fermeture du trou.

8. Procédé (40) selon une quelconque revendication précédente, comprenant l'injection d'un liquide de nettoyage à travers le trou (32) pour nettoyer la fente avant l'injection de la résine liquide.

9. Procédé (40) selon une quelconque revendication précédente, dans lequel l'alésage (24), dans lequel l'usure se produit, est un alésage de tige intermédiaire (24), dans lequel une tige à vitesse intermédiaire de l'ensemble engrenage est reçue à travers celui-ci, la tige à vitesse intermédiaire étant couplée entre une tige à haute vitesse couplée à un générateur de l'éolienne (10) et une tige à basse vitesse couplée à un rotor (16) de l'éolienne (10).

10. Procédé (40) selon la revendication 9, dans lequel le palier, dans l'alésage de tige intermédiaire (24), au niveau duquel l'usure se produit, est un palier d'extrémité de rotor situé à une extrémité de l'alésage de tige intermédiaire (24) proximal au rotor (16) de l'éolienne.

11. Procédé (40) selon une quelconque revendication précédente, comprenant, avant la permission donnée à la résine liquide de se solidifier dans la fente, la vérification si le réalignement du palier dans l'alésage (22, 24, 26) est nécessaire.

12. Procédé (40) selon la revendication 11, dans lequel, si le réalignement est nécessaire, le réalignement actif du palier dans l'alésage (22, 24, 26), en option en utilisant un dispositif d'élingue.

13. Boîte d'engrenages d'éolienne réparée selon le procédé (40) selon l'une quelconque des revendications 1 à 12.

14. Éolienne (10) réparée selon le procédé (40) selon l'une quelconque des revendications 1 à 12.
